# EUROPÄISCHE PATENTSCHRIFT

(11) **EP 1 407 224 B1**
(45) Veröffentlichungstag und Bekanntmachung des Hinweises auf die Patenterteilung: **28.12.2005**
(21) Anmeldenummer: 02747460.0
(22) Anmeldetag: 05.07.2002
(51) Int. Cl.: G01B 21/30, G01B 5/28, G01B 11/30, G01B 21/04

(54) **VERFAHREN ZUR MESSUNG VON OBERFLÄCHENEIGENSCHAFTEN SOWIE KOORDINATENMESSGERÄT**
METHOD FOR MEASURING SURFACE PROPERTIES AND CO-ORDINATE MEASURING DEVICE
PROCEDE POUR MESURER DES PROPRIETES SUPERFICIELLES ET DISPOSITIF DE MESURE DE COORDONNEES

(30) Priorität: 16.07.2001 DE 10133838
(43) Veröffentlichungstag der Anmeldung: 14.04.2004
(73) Patentinhaber: Werth Messtechnik GmbH, 35394 Giessen (DE)
(72) Erfinder: FERGER, Detlef, 35745 Herborn (DE)
(74) Vertreter: Stoffregen, Hans-Herbert
(86) Internationale Anmeldenummer: PCT/EP2002/007466
(87) Internationale Veröffentlichungsnummer: WO 2003/008905

(56) Entgegenhaltungen:
- EP-A- 0 916 922
- WO-A-98/30866
- WO-A-99/63301
- DE-A- 4 327 250

## Beschreibung

Die Erfindung bezieht sich auf ein Verfahren zur Messung von Oberflächeneigenschaften eines Werkstücks mittels eines Koordinatenmessgerätes umfassend ein auf der Oberfläche sich abstützendes und relativ zu dieser bewegbares Antastformelement sowie einen opto-elektronischen Abstandssensor zur unmittelbaren Messung der Oberflächeneigenschaften. Ferner bezieht sich die Erfindung auf ein Koordinatenmessgerät zur Messung von Oberflächeneigenschaften eines Werkstückes umfassend ein entlang Koordinatenachsen des Koordinatenmessgerätes verfahrbares Antastformelement sowie einen opto-elektronischen Abstandssensor.

Die Bestimmung der Oberflächenqualität dient zur Beurteilung der Begrenzungsfläche eines Werkstücks. Dabei können Tastschnittgeräte zur Anwendung gelangen, wobei mittels z.B. einer Saphir-, Diamant- oder einer einfachen Srahlspitze als Tastnadel die Oberfläche abgetastet wird. Die Auslenkung der Tastnadel kann z.B. induktiv oder aber laserinterferometrisch aufgenommen werden.

So wird nach der DE.Z: Techniker 5/96, Seiten 13 bis 20, zur Bestimmung der Oberflächenrauigkeit eine Tastspitze auf einer Probenfläche geführt. Die Tastspitze geht von einem Cantilever aus. Auf die Außenfläche des Cantilevers wird ein Laserstrahl gerichtet, dessen Reflexion mittels eines PSD-Sensors erfasst wird. Laser und PSD-Sensor bilden folglich einen optischen Sensor.

In der DE 198 24 107 A1 wird ein Verfahren zur Messgrößenbestimmung einer Oberfläche eines Prüflings mit einem auf der, Oberfläche sich abstützenden Tastelement beschrieben, wobei die Position des Tastelementes unmittelbar oder eine Position zumindest einer dem Tastelement unmittelbar zugeordneten Zielmarke mit einem Bildverarbeitungssensor erfaßt und unter Berücksichtigung der Relativbewegung zwischen dem Prüfling und dem Tastelement die Oberflächenmessgröße ermittelt wird.

Verfahren und Geräte zur Ermittlung der Oberflächenqualität von Werkstücken sind auch beschrieben in der DE.Z: T. Pfeiffer, Fertigungsmesstechnik, Verlag Oldenbourg, 2. Auflage, Seite 289 bis 298.

Ein Verfahren und ein Koordinatenmessgerät der eingangs genannten Art ist der WO 98/30866 zu entnehmen. Dabei werden mit völlig getrennten optischen und mechanischen Messsystemen Oberflächeneigenschaften eines Werkstücks gemessen.

Um opto-taktil Oberflächeneigenschaften zu messen, wird nach der WO 99/63301 ein Koordinatenmessgerät vorgeschlagen, das einen entlang zu messender Werkstückoberfläche verfahrbaren Fasertaster aufweist, dessen Position mittels einer Kamera gemessen wird. Kamera und Taster bilden eine gemeinsam verstellbare Einheit, wobei der Taster über eine opto-mechanische Schnittstelle mit einer Justiereinrichtung einer Wechselhalterung verbunden ist.

Der vorliegenden Erfindung liegt das Problem zu Grunde, ein Verfahren und ein Koordinatenmessgerät der eingangs genannten Art so weiterzubilden, dass Oberflächeneigenschaften überaus präzise messbar sind, wobei auch Messungen in weichen Oberflächenbereichen oder solchen großer Rauigkeit durchgeführt werden sollen, ohne dass die Gefahr von Beschädigung bzw. unerwünscht hohen Messungenauigkeiten gegeben sind.

Erfindungsgemäß wird das Problem durch ein Verfahren der eingangs genannten Art im Wesentlichen dadurch gelöst, dass der opto-elektronische Abstandssensor wahlweise unmittelbar die Oberflächeneigenschaften des Werkstücks misst oder dass mit dem Abstandssensor die Position des Antastformelements oder einer diesem zugeordneten Marke zur Bestimmung der Oberflächeneigenschaften des Werkstücks gemessen wird.

Erfindungsgemäß wird ein Verfahren zur Verfügung gestellt, mit dem Oberflächeneigenschaften auch dann hinreichend präzise messbar sind, wenn die Oberfläche z.B. für ein sich auf dieser abstützendes Antastformelement zu weich ist oder auf Grund der Oberflächenrauigkeit mit einem Antastformelement eine hinreichende Messpunktdichte nicht erzielbar ist; denn in diesem Fall wird das Antastformelement aus dem Strahlengang des Abstandssensors herausgeschwenkt und mit diesem unmittelbar die Oberfläche gemessen.

Bei dem Antastformelement kann es sich um eine Tastnadel bekannter Konstruktion handeln. Es kann jedoch auch ein opto-taktil arbeitender Fasertaster verwendet werden, dessen Position mittels eines Bildverarbeitungssensors wie CCD-Kamera mit Subpixelgenauigkeit gemessen werden kann. In diesem Fall dient der Abstandssensor als Lichtquelle für den opto-taktilen Sensor. Bei der Verwendung einer üblichen Tastnadel kann dagegen der Abstandssensor selbst als Messensor verwendet werden.

Als Abstandssensor kann ein solcher verwendet werden, der nach dem Video-Autofocus-Verfahren, dem Laser-Autofocus-Verfahren oder dem Foucault'schen Schneiden-Prinzip arbeitet. Dabei kann der Abstandssensor mit dem Bildverarbeitungssensor kombiniert werden.

Das Antastformelement kann über eine Wechselschmittstelle in dem Strahlengang des Abstandssensors positioniert bzw. aus diesem entfernt werden, also vor dem optischen Abstandssensor positioniert oder in einer Parkstation abgelegt werden. Dabei kann als Wechselschnittstelle eine solche verwendet werden, die bei vorhandenem Tastsystem des Koordinatenmessgerätes zum Einsatz gelangt.

Ein Koordinatenmessgerät der eingangs genannten Art zeichnet sich dadurch aus, dass das Antastformelement derart in Bezug auf den opto-elektronischen Abstandssensor verstellbar angeordnet ist, dass der opto-elektronische Abstandssensor wahlweise unmittelbar die Oberfläche des Werkstücks oder die Position des Antastformelements oder einer diesem fest zugeordneten Marke misst.

Dabei kann das Antastformelement eine Tastnadel oder ein opto-taktiler Sensor sein, wobei im letzteren Fall Abstandssensor und Bildverarbeitungssensor kombinierbar sind.

Der Abstandssensor ist insbesondere ein nach dem Foucault'schen Schneiden-Prinzip arbeitender oder ein Laserabstandssensor.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispiel.

Es zeigen:
- Fig. 1: eine Prinzipdarstellung eines Koordinatenmessgerätes,
- Fig. 2: eine erste Arbeitsweise des Koordinatenmessgerätes gemäß Fig. 1,
- Fig. 3: eine zweite Arbeitsweise des Koordinatenmessgerätes gemäß Fig. 1,
- Fig. 4: eine dritte Arbeitsweise des Koordinatenmessgerätes nach Fig. 1 und
- Fig. 5: eine Draufsicht auf ein zu messendes Objekt.

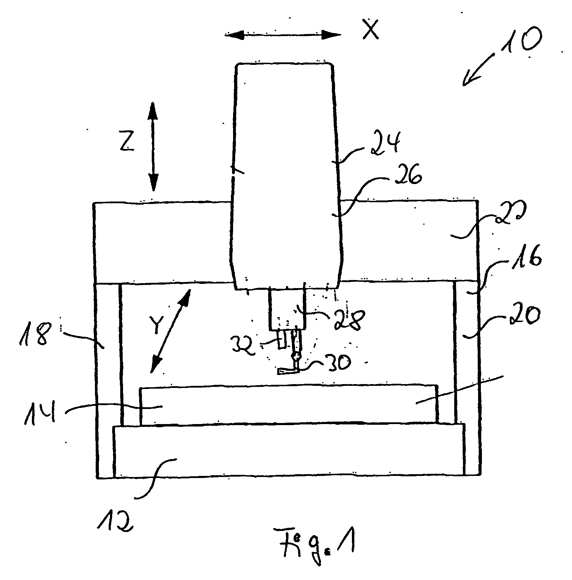

Der Fig. 1 ist rein prinzipiell ein Koordinatenmessgerät 10 mit z.B. aus Granit bestehendem Grundrahmen 12 mit Messtisch 14 zu entnehmen, auf dem ein nicht dargestelltes Werkstück anordbar ist, um dessen Oberflächeneigenschaften wie Rauigkeit zu messen.

Entlang dem Grundrahmen ist ein Portal 16 in Y-Richtung verstellbar. Hierzu sind Säulen oder Ständer 18, 20 gleitend auf dem Grundrahmen 12 abgestützt. Von den Säulen 18, 20 geht eine Traverse 22 aus, entlang der, also gemäß der Figur in X-Richtung ein Schlitten 24 verstellbar ist, der seinerseits eine Pinole oder Säule 26 aufnimmt, die in Z-Richtung verstellbar ist. Von der Pinole oder Säule 26 bzw. einer Wechseischnittsielle 28 geht ein Antastformelement 30 aus, das zur Bestimmung der Oberflächeneigenschaften entlang des Werkstückes gleitet, um aus der Position des Antastelementes bzw. dessen Tastspitze die Oberflächeneigenschaften messen zu können. Um die Bewegung des Antastformelements zu messen, ist auf dieses ein Abstandssensor 32 ausgerichtet und in Abhängigkeit von z.B. der Rauigkeit der Oberfläche des Werkstückes wird das Antastformelement 30 entsprechend ausgelenkt und somit der Abstand zu dem Abstandssensor 32 verändert, so dass in Folge dessen durch den Abstandssensor die Oberflächeneigenschaft gemessen werden kann.

Bei dem Antastformelement 30 kann es sich um eine Tastnadel handeln, die z.B. aus Metall, Saphir oder Diamant bestehen kann. Insoweit wird auf hinlänglich bekannte Techniken verwiesen. Bei dem Antastformelement 30 kann es sich jedoch auch um einen epto-taklilen Fasertaster handeln, wie dieser z.B. in der WO 98/57121 beschrieben ist, auf deren Offenbarung ausdrücklich verwiesen wird.

Hinsichtlich des Abstandssensors 32 ist anzumerken, dass es sich hierbei insbesondere um einen solchen handelt, der nach dem Video-Autofocus-Verfahren, dem Laser-Autofocus-Verfahren und dem Foucault'schen Schneidenprinzip arbeitet.

Wird ein opto-taktiler Taster verwendet, so weist das Koordinatenmessgerät einen Bildverarbeitungssensor wie CCD-Kamera mit Bildaufbereitung und Übertragung sowie Bildverarbeitung auf, um unmittelbar aus der Verschiebung des Bildes auf dem CCD-Feld, sofern eine Lageänderung nicht in Richtung der optischen Achse des Bildverarbeitungssensors erfolgt, Positionsveränderungen des Tasters und somit Oberflächeneigenschaften zu ermitteln. Dabei kann eine Anordnung zur Anwendung gelangen, wie diese prinzipiell der DE 198 24 107 A1 zu entnehmen ist, auf deren Offenbarung gleichfalls nachdrücklich verwiesen wird.

Sofern mit dem Antastformelement 30 nicht gemessen werden kann, sei es, dass die Oberfläche zu weich ist und somit durch das Entlanggleiten des Antastformelements 30 auf dieser Verformungen bzw. Beschädigungen auftreten können, sei es, dass die Oberflächengeometrie bzw. die Rauigkeit Messungen mit dem Formtastelement 30 nicht ermöglichen würden, wird das Antastformelement 30 aus dem Strahlengang des Abstandssensors 32 herausgeschwenkt, um mit diesem unmittelbar zu messen.

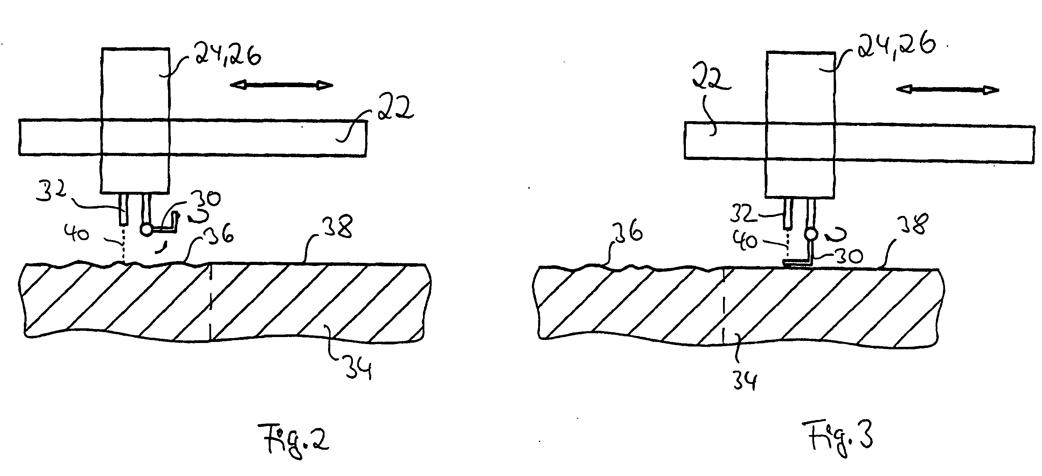

Dies wird rein prinzipiell an Hand der Fig. 2 und 3 verdeutlicht. Den Fig. 2 und 3 ist ein Werkstück 34 mit Oberflächenabschnitten 36, 38 zu entnehmen, die voneinander abweichende Eigenschaften derart aufweisen, dass der in der Zeichnung linke Abschnitt 36 eine so große Rauigkeit aufweist, dass ein Abtasten mit dem Antastformelement 30 nicht möglich ist. In diesem Fall wird das Antastformelement 30 aus dem Strahlengang 40 des Abstandssensors 42 herausgeschwenkt und unmittelbar mit dem Abstandssensor 42 gemessen. Im Oberflächenbereich 38 ist dagegen die Rauigkeit so gering, dass mit dem Anlastformelement 30 gemessen werden kann. In diesem Fall wird das Antastformelement 30 in den Strahlengang 40 des Abstandssensors 32 verschwenkt, um über den Abstandssensor 32 dessen Position zu ermitteln.

Gelangt ein opto-taktiler Taster zu Einsatz, kann der Abstandssensor 32 mit dem Bildverarbeitungssensor kombiniert werden. Unabhängig hiervon übt der Abstandssensor 32 bei der Verwendung eines opto-taktilen Sensors nicht die Funktion eines Messsensors, sondern die einer Beleuchtung aus.

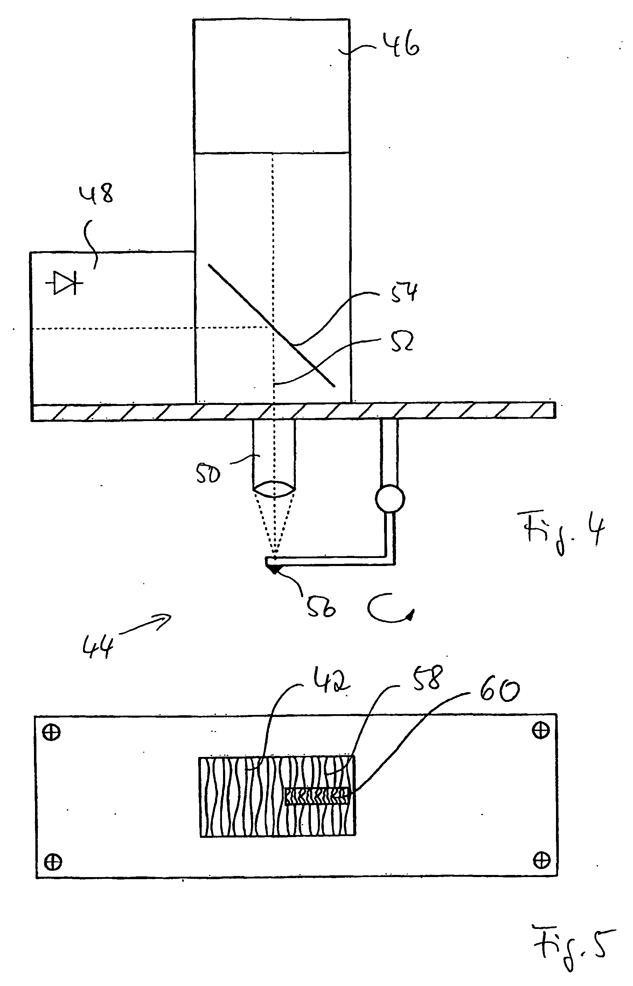

Anhand der Fig. 4 und 5 soll eine weitere Ausgestaltung der erfindungsgemäßen Lehre erläutert werden. Zum Messen eines Bereichs 42 eines Werkstücks wird neben einem taktil messenden Sensor 44 ein optisches Sensorsystem bestehend aus einem Bildverarbeitungssensor 46 und einem Laserabstandssensor 48 benutzt. Somit ist im Vergleich zu den Ausführungsbeispielen der Fig. 1 und 3 ergänzend zu dem Laserabstandssensor 48 der Bildverarbeitungssensor 46 vorhanden. Sowohl dem Abstandslasersensor 48 als auch dem Bildverarbeitungssensor 46 ist eine gemeinsame Optik 50 zugeordnet, wobei der Strahlengang 52 über einen Teilerspiegel 54 dem Laserabstandssensor 48 bzw. dem Bildverarbeitungssensor 46 zugeleitet wird.

Sowohl der Bildverarbeitungssensor 46 als auch der Laserabstandssensor 48 sind in der Lage, direkt auf dem Bereich 42 des Werkstückes zu messen. Bei optischen Antastverfahren kann dabei der Nachteil gegeben sein, dass die Ergebnisse durch Oberflächeneigenschaften verfälscht werden. Durch Einschwenken des zusätzlichen taktilen Sensors 44 bzw. dessen Tastnadel 56 für die Oberflächenmessung kann mit derselben Gerätekonfiguration alternativ optisch und mechanisch gemessen werden.

Im Ausführungsbeispiel weist der zu messende Bereich 42 sowohl in seiner größeren Oberfläche 58 als auch in einem schmalen Schlitz 60 gleiche Oberflächeneigenschaften auf. So kann zunächst mit dem taktil messenden Sensor 44 der Bereich 58 gemessen werden. Mit dem optischen Sensor 48 kann an der gleichen Stelle gegengemessen werden, so dass das optische Verfahren an der aktuellen Materialoberfläche an das mechanische Verfahren angeschlossen und somit geeicht wird. Mit anderen Worten erfolgt durch das mechanisch tastende Messen eine Kalibrierung für das berührungslose optische Messen. Sodann kann mit dem optischen Sensor, insbesondere dem Laserabstandssensor 48 der von dem taktil arbeitenden Sensor 44 schwer oder nicht zugängliche Schlitzbereich 60 gemessen werden.

Mit dem Bildverarbeitungssensor 46 erfolgt insbesondere ein Einmessen des Werkstücks bzw. des Bereichs 42, wohingegen mit dem Laserabstandssensor 48 die Oberflächeneigenschaften des Bereichs 42 gemessen werden.

## Patentansprüche

1. herfahren zur Messung von Oberflächeneigenschaften eines Werkstücks (34) mittels eines Koordinatenmessgerätes (10) umfassend ein auf der Oberfläche (36, 38, 58, 60) sich abstützendes und relativ zo dieser bewegbares Antastformelement (30, 44) sowie einen opto-elektronischen Abstandssensor (32, 48) zur unmittelbaren Messung der Oberflächeneigenschaften,
**dadurch gekennzeichnet,**
**dass** der opto-elektronische Abstandssensor (32, 48) wahlweise umnittelbar die Oberflächeneigenschaften des Werkstücks (34) misst oder dass mit dem Abstandssatsor die Position des Antastformelements (30, 44, 46) oder einer diesem zugeordneten Marke zur Bestimmung der Oberflächeneigenschaften des Werkstücks gemessen wird.

2. Verfahren nach Anspruch 1,
**dadurch gekennzeichnet,**
**dass** als Antastformelement (30, 44, 56) eine Tastnadel verwendet wird.

3. Verfahren nach Anspruch 1,
**dadurch gekennzeichnet,**
**dass** als Antastformelement (30) ein opto-taktil arbeitender Fasertaster verwendet wird.

4. Verfahren nach Anspruch 1,
**dadurch gekennzeichnet,**
**dass** ein nach dem video-Autofocus-Verfahren, dem Laser-Autofocus-Verfahren oder dem Foucault'schen Schneidenprinzip arbeitender Abstandssensor (32, 48) verwendet wird.

5. Verfahren Anspruch 1,
**dadurch gekennzeichnet,**
**dass** mit dem Abstandssensor (32, 48) ein Bildverarbeitungssensor kombiniert wird.

6. Verfahren nach Anspruch 1,
**dadurch gekennzeichnet,**
**dass** das Antastformelement (30, 44, 56) über eine Wechselschnittstelle in dem Strahlengang des Abstandssensors (32, 48) positioniert bzw. aus diesem entfernt wird.

7. Verfahren nach Anspruch 6,
**dadurch gekennzeichnet,**
**dass** als Wechselschnittstelle eine solche verwendet wird, die für ein in dem Koordinatenmessgerät (10) vorhandenes Tastsystem eingesetzt wird.

8. Koordinatenmessgerät (10) zur Messung von Oberflächeneigenschaften eines Werkstückes (34) umfassend ein entlang Koordinatenachsen (X, Y, Z) des Koordinatenmessgerätes verfahrbares Antastformelement (30, 44) sowie einen opto-elektronischen Abstandssensor (32, 48),
**dadurch gekennzeichnet,**
**dass** das Antastformelement (30, 44) derart in Bezug auf den opto-elektronischen Abstandssensor (32, 48) verstellbar angeordnet ist, dass der opto-elektronische Abstandssensor (32, 48) wahlweise unmittelbar die Oberfläche (36, 38, 58, 60) des Werkstücks oder die Position des Antastformelements (30, 44) oder einer diesem fest zugeordneten Marke misst.

9. Koordinatenmessgerät nach Anspruch 8,
**dadurch gekennzeichnet,**
**dass** das Antastformelement (30, 44, 56) eine Tastnadel ist.

10. Koordinatenmessgerät nach Anspruch 8,
**dadurch gekennzeichnet,**
**dass** das Antastformelement (30, 44) ein opto-taktil arbeitender Fasertaster ist.

11. Koordinatenmessgerät nach Anspruch 8,
**dadurch gekennzeichnet,**
**dass** der opto-elektronische Abstandssensor (32, 48) ein nach dem Laser-Autofocus-Verfahen, dem Video-Autofocus-Verfahren oder dem foucault'schen Schneidenprinzip arbeitender Sensor ist.

12. Koordinatenmessgerät nach Anspruch 8,
**dadurch gekennzeichnet,**
**dass** das Koordinatenmessgerät (10) einen Bildverarbeitungssensor (46) aufweist, der gegebenenfalls mit dem Abstandssensor (32, 48) kombiniert ist.

13. Koordinatenmessgerät nach Anspruch 8,
**dadurch gekennzeichnet,**
**dass** das Antastformelement (30, 44) über eine Wechselschittstelle verstellbar ist.

14. Koordinatenmessgerät nach Anspruch 13,
**dadurch gekennzeichnet,**
**dass** die Wechselschnittstelle eine für vorhandene Tastsysteme in dem Koordinatenmessgerät (10) benutzte Wechselschnittstelle ist.

## Claims

1. Process for the measurement of surface characteristics of a work piece (34) with a coordinate measurement device (10) comprising a sensing probe element (30, 44) supporting on the surface (36, 38, 58, 60) and being movable relative to it, as well as an opto-electronic distance sensor (32, 48) for direct measurement of the surface characteristics,
**characterized in**
**that** the opto-electronic distance sensor (32, 48) optionally measures the surface characteristics of the work piece (34) directly or that with the distance sensor the position of the sensing probe element (30, 44, 46) or a marking allocated to it is measured for the determination of the surface characteristics of the work piece.

2. Process according to Claim 1,
**characterized in**
**that** a probe needle is used as sensing probe element (30, 44, 56).

3. Process according to Claim 1,
**characterized in**
**that** an opto-tactile fiber scanner is used as sensing probe element (30).

4. Process according to Claim 1,
**characterized in**
**that** a distance sensor (32, 48) functioning according to the video auto-focus process, the laser auto-focus process or the Foucault knife-edge principle is used.

5. Process according to Claim 1,
**characterized in**
**that** an image processing sensor is combined with the distance sensor (32, 48).

6. Process according to Claim 1,
**characterized in**
**that** the sensing probe element (30, 44, 56) is positioned via a change-over interface in the beam path of the distance sensor (32, 48) or can be removed from it.

7. Process according to Claim 6,
**characterized in**
**that** as change-over interface such a one is used as being employed for a sensing system present in a coordinate measurement device (10).

8. Coordinate measurement device (10) for the measurement of surface characteristics of a work piece (34) comprising a sensing probe element (30, 44) portable along coordinate axes (X, Y, Z) of the coordinate measurement device, as well as an opto-electronic distance sensor (32, 48),
**characterized in**
**that** the sensing probe element (30, 44) is arranged adjustable in relation to the opto-electronic distance sensor (32, 48) in such a way that the opto-electronic distance sensor (32, 48) optionally measures the surface (36, 38, 58, 60) of the work piece directly or the position of the sensing probe element (30, 44) or of a marking permanently allocated to it.

9. Coordinate measurement device according to Claim 8,
**characterized in**
**that** the sensing probe element (30, 44, 56) is a probe needle.

10. Coordinate measurement device according to Claim 8,
**characterized in**
**that** the sensing probe element (30, 44) is a fiber probe functioning opto-tactile.

11. Coordinate measurement device according to Claim 8,
**characterized in**
**that** the opto-electronic distance sensor (32, 48) is a sensor functioning according to the laser auto-focus process, the video auto-focus process, or the Foucault knife-edge principle.

12. Coordinate measurement device according to Claim 8,
**characterized in**
**that** the coordinate measurement device (10) has an image processing sensor (46) that can be combined with a distance sensor (32, 48).

13. Coordinate measurement device according to Claim 8,
**characterized in**
**that** the sensing probe element (30, 44) is adjustable via a change-over interface.

14. Coordinate measurement device according to Claim 13,
**characterized in**
**that** the change-over interface is a change-over interface used for present sensing systems in the coordinate measurement device (10).

## Revendications

1. Procédé pour mesurer des propriétés superficielles d'une pièce à usiner (34) à l'aide d'un dispositif de mesure de coordonnées (10) regroupant un palpeur (30, 44) s'appuyant sur la surface (36, 38, 58, 60) et mobile par rapport à celle-ci ainsi qu'un capteur de distance optoélectronique (32, 48) pour mesurer directement les propriétés superficielles,
**caractérisé en ce que**
le capteur de distance optoélectronique (32, 48) mesure au choix directement les propriétés superficielles de la pièce à usiner (34), ou la position du palpeur (30, 44, 46) ou d'un repère associé à celui-ci, pour déterminer les propriétés superficielles de la pièce à usiner.

2. Procédé selon la revendication 1,
**caractérisé en ce qu'**
une aiguille de contact est utilisée comme palpeur (30, 44, 56).

3. Procédé selon la revendication 1,
**caractérisé en ce qu'**
un palpeur à fibre fonctionnant de manière optique et tactile est utilisé comme palpeur (30).

4. Procédé selon la revendication 1,
**caractérisé en ce qu'**
on utilise un capteur de distance (32, 48) fonctionnant suivant le procédé vidéo autofocus, le procédé laser autofocus ou le principe de découpe de Foucault.

5. Procédé selon la revendication 1,
**caractérisé en ce qu'**
un capteur de traitement d'image est combiné au capteur de distance (32, 48).

6. Procédé selon la revendication 1,
**caractérisé en ce que**
le palpeur (30, 44, 56) est positionné dans la trajectoire de rayonnement du capteur de distance (32, 48) ou est éloigné de cette voie par une interface de transformation.

7. Procédé selon la revendication 6,
**caractérisé en ce que**
comme interface de changement on utilise une interface employée pour un système de contact disponible dans le dispositif de mesure de coordonnées (10).

8. Dispositif de mesure de coordonnées (10) pour mesurer des propriétés superficielles d'une pièce à usiner (34) regroupant un palpeur (30, 44) mobile le long des axes de coordonnées (X, Y, Z) du dispositif de mesure de coordonnées ainsi qu'un capteur de distance optoélectronique (32, 48),
**caractérisé en ce que**
le palpeur (30, 44) est mobile par rapport au capteur de distance optoélectronique (32, 48) de façon à ce que ce dernier mesure au choix directement la surface (36, 38, 58, 60) de la pièce à usiner ou la position du palpeur (30, 44) ou d'un repère solidaire de celui-ci.

9. Dispositif de mesure de coordonnées selon la revendication 8,
**caractérisé en ce que**
le palpeur (30, 44, 56) est une aiguille de contact.

10. Dispositif de mesure de coordonnées selon la revendication 8,
**caractérisé en ce que**
le palpeur (30, 44) est un palpeur à fibre fonctionnant de manière optique et tactile.

11. Dispositif de mesure de coordonnées selon la revendication 8,
**caractérisé en ce que**
le capteur de distance optoélectronique (32, 48) est un capteur fonctionnant suivant le procédé vidéo autofocus, le procédé laser autofocus ou le principe de découpe de Foucault.

12. Dispositif de mesure de coordonnées selon la revendication 8,
**caractérisé en ce que**
le dispositif de mesure de coordonnées (10) présente un capteur de traitement d'image (46) combiné le cas échéant au capteur de distance (32, 48).

13. Dispositif de mesure de coordonnées selon la revendication 8,
**caractérisé en ce que**
le palpeur (30, 44) peut être déplacé par une interface de transformation.

14. Dispositif de mesure de coordonnées selon la revendication 13,
**caractérisé en ce que**
l'interface de transformation est une interface employée pour des systèmes de contact existant dans le dispositif de mesure de coordonnées (10).
